# EUROPEAN PATENT SPECIFICATION

(11) **EP 2 930 996 B1**
(45) Date of publication and mention of the grant of the patent: **22.11.2017**
(21) Application number: 13870888.8
(22) Date of filing: 28.08.2013
(51) Int. Cl.: H04W 74/00

(54) **METHOD FOR SENDING CLUSTER MESSAGE, BASE STATION AND TERMINAL DEVICE**
VERFAHREN ZUM SENDEN VON NACHRICHTENCLUSTERN, BASISSTATION UND ENDGERÄTEVORRICHTUNG
PROCÉDÉ D'ENVOI DE MESSAGE COLLECTIF, STATION DE BASE ET DISPOSITIF TERMINAL

(30) Priority: 09.01.2013 CN 201310007171
(43) Date of publication of application: 14.10.2015
(73) Proprietor: ZTE Corporation, Shenzhen, Guangdong 518057 (CN)
(72) Inventor: LIU, Zhuo, Shenzhen Guangdong 518057 (CN); LI, Liangbin, Shenzhen Guangdong 518057 (CN); YANG, Fei, Shenzhen Guangdong 518057 (CN)
(74) Representative: D'Halleweyn, Nele Veerle Trees Gertrudis
(86) International application number: PCT/CN2013/082436
(87) International publication number: WO 2014/107964

(56) References cited:
- WO-A1-2012/150883
- CN-A- 102 387 600
- CN-A- 102 572 937
- CN-A- 103 067 880
- WEI ZOU ET AL: "Small data transmission at the detached machine-type-communication device", 2012 IEEE 23RD INTERNATIONAL SYMPOSIUM ON PERSONAL, INDOOR AND MOBILE RADIO COMMUNICATIONS (PIMRC 2012) : SYDNEY, AUSTRALIA, 9 - 12 SEPTEMBER 2012, IEEE, PISCATAWAY, NJ, 9 September 2012 (2012-09-09), pages 13-17, XP032272758, DOI: 10.1109/PIMRC.2012.6362566 ISBN: 978-1-4673-2566-0
- "LTE; Evolved Universal Terrestrial Radio Access (E-UTRA); Medium Access Control (MAC) protocol specification (3GPP TS 36.321 version 9.1.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V9.1.0, 1 February 2010 (2010-02-01), XP014046009,

## Description

### Technical Field

The present invention relates to the cluster communication field, and in particular, to a scheme of transmitting a cluster message by using a random access process.

### Background of the Related Art

The cluster communication system is a system which relies mainly on the simplex and half duplex, and mainly focuses on the voice services. In the cluster communication system, there is only one cluster terminal which has the words right, and the rest of the cluster terminals are in the listening state or the idle state and only need the downlink synchronization, but the listening users still need to report the state information to the base station, so that the base station performs the corresponding scheduling according to the channel quality situation of the cluster terminal; and the listening users still need to send the relevant signaling to the base station when performing the operations such as applying and releasing the words right, etc., so that the base station allocates the resources.

Based on the characteristics of the above-mentioned cluster communication system, if the related art is used, it is required to establish the radio resource control (RRC) connection for each listening user as well, and to transmit the corresponding information on the uplink physical channel, which is obviously not suitable for the cluster system; because the downlink data of the listening users are the same, there is no need to transmit a copy of same data for each listening user and establish a RRC connection for each listening user, and the system capacity will be small.

The random access technology is an important technology of the media access control in the communication system. In the LTE, the random access is the access process of the terminal before the communication, mainly used for the purposes such as the initial access of the terminal, the reconstruction and switching of the radio resource control (RRC) connection, etc.

In the LTE system, aiming at the characteristics of the cluster communication system, the relevant cluster information can be carried through the Msg3 in the random access process based on competition, so that it is able to not establish a RRC connection for each listening user in the cluster system, and the purpose of transmitting the uplink data can be achieved, which effectively improves the system capacity and saves the system resources.

The document WO2012150883A1 discloses a method for adapting the allocating of random access resource to user equipments of a cell served by a base station. The method in a base station where each RA preamble group maps or corresponds to an uplink allocation size, comprises receiving a RA preamble from a UE in a cell served by the base station, the preamble indicating a requested resource allocation size for uplink transmission of UE data. Radio resource usage in the cell is monitored and a mapping between groups of RA preambles and uplink allocation sizes configured for the cell is adapted based on the monitored usage of radio resources.

### Content of the Invention

The technical problem that the present invention requires to solve is to provide a method for sending a cluster message, a base station and a terminal device, according to claims 1, 5, 6 respectively, to improve the utilization rate of the system resources.

In order to solve the above-mentioned technical problem, the present invention discloses a method for sending a cluster message, comprising:
configuring a preamble range for random access of a cluster terminal under a current cell, and a base station notifying each terminal of the configured preamble range for random access of the cluster terminal through a broadcast message;
the base station receiving a random access request initiated by the terminal, and if determining that the terminal transmits a cluster message through a random access process by a preamble in the random access request, then performing Msg3 authorization on the terminal according to a type of the cluster random access, and notifying the terminal of an authorization result through an Msg2;
the terminal receiving the Msg2, forming an Msg3 according to the authorization result in the Msg2 and uplink information to be sent, and sending the Msg3 to a network side; and
the network side receiving and analyzing the Msg3 message, and acquiring the cluster message reported by the terminal therefrom.

Preferably, in the above-mentioned method, uplink information carried by the Msg3 sent by the cluster terminal comprises state information and signaling of the cluster terminal.

Preferably, in the above-mentioned method, a static or dynamic configuration mode is adopted for configuring the preamble range for the random access of the cluster terminal under the current cell.

Preferably, in the above-mentioned method, when a dynamic mode is adopted for configuring the preamble range for the random access of the cluster terminal , the preamble range for the random access of the cluster terminal is dynamically adjusted through a number of the cluster numbers and a number of normal long term evolution (LTE) terminals accessed under the current cell.

Preferably, in the above-mentioned method, the base station dynamically adjusts the preamble range for the random access of the cluster terminal through a number of the cluster terminals and a number of normal long term evolution (LTE) terminals accessed under the current cell.

The present invention further discloses a network side device, comprising a sending module, a judgment module and a cluster terminal random access processing module, wherein,
the sending module is configured to: notify each terminal of a configured preamble range for random access of a cluster terminal under a current cell through a broadcast message;
the judgment module is configured to: receive a random access request initiated by the terminal, and acquire a preamble in the random access request, and send the random access request to the cluster terminal random access processing module when determining that the random access request is the random access of the cluster terminal according to the preamble range used for random access of the cluster terminal configured by the configuration module;
the cluster terminal random access processing module is configured to: receive the random access request sent by the judgment module, perform Msg3 authorization on the terminal which initiates the request according to a type of the random access, and notify the terminal of an authorization result through an Msg2; and analyze the Msg3 message sent by the terminal, and acquire the cluster message reported by the terminal therefrom.

The present invention further discloses a terminal device, comprising:
a first module, configured to: acquire a preamble range for random access of a cluster terminal configured by a network side through a broadcast message, and when where is a need for a cluster operation, select a corresponding preamble in the preamble range for the random access of the cluster terminal to send a random access request to a base station; and
a second module, configured to: receive an Msg2 sent by the base station, form an Msg3 according to an authorization result in the Msg2 and uplink information to be sent, and send the Msg3 to the base station.

Preferably, in the above-mentioned terminal device, the first module is configured to: when there is a need for the following cluster operations, initiate a random access request used for the random access of the cluster terminal:
reporting state information, applying for words right, occupying the words right, and releasing the words right.

Preferably, in the above-mentioned terminal device, uplink information carried by the Msg3 sent by the second module comprises state information and signaling of the cluster terminal.

The technical scheme of the present application saves the system resources effectively and improves the system capacity.

### Brief Description of Drawings

- FIG. 1: is a flow chart of sending a cluster message in the present embodiment;
- FIG. 2: is a division diagram of Preambles in the present embodiment.

### Preferred Embodiments of the Present Invention

The technical scheme of the present invention is described in detail with reference to the accompanying drawings hereinafter. It should be illustrated that, in the case of not conflicting, the embodiments in the present application and features in these embodiments can be combined with each other.

### Embodiment 1

The inventor of the present case considers that an Msg3 message in a random access process can be used to carry the corresponding cluster state information and cluster signaling; and in order to enable the base station distinguish the random access of the cluster terminal and the random access process of the normal LTE, the Preamble can be divided so that a section of the Preamble is used for the random access process initiated by the cluster terminal. At this moment, the base station just distinguishes whether the random access initiated by the terminal is used to transmit the cluster message through the Preamble.

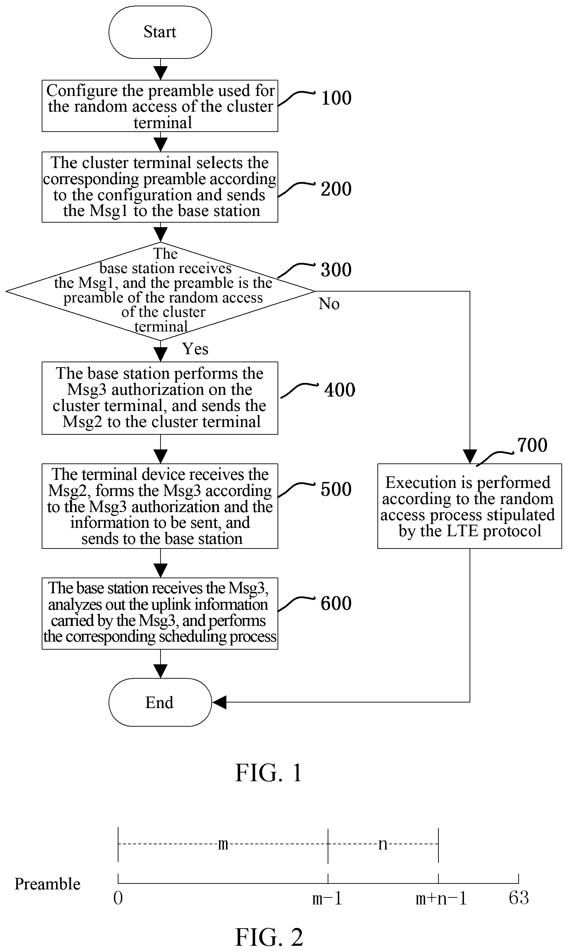

Based on the above ideas, the present embodiment provides a method for sending a cluster message, as shown in FIG. 1, including the following steps from 100 to 700.

In step 100, the network side configures the preamble range of the base station used for the random access of the cluster terminal under the current cell, and notifies it to each cluster terminal through the broadcast message.

When the configuration operation is performed in the present step, it can be synchronized to the foreground and terminal through the background static configuration. The foreground can also dynamically adjust the Preamble range through the number of the cluster terminals and the number of the normal LTE terminals accessed under the current cell. For example, the Preamble range used for the random access of the cluster terminal is configured according to a ratio of the number of the cluster terminals and the number of the normal LTE terminals. The more the number of the type of terminals is, the more the number of the Preamble of the random access configured for it.

Wherein, the Preamble range used for different access processes can be configured referring to the mode as shown in FIG. 2. In particular, the resources used in the random access process of the cluster terminals are distinguished with the resources used in the random access processes of the LTE terminals, to reduce the probability of the random access collision. It is considered that 64 Preambles are divided into three blocks, one block is used for the competition random access of the normal LTE; one block is used for the cluster random access; and one block is used for the non-competition random access of the normal LTE. For example, the number of the Preambles used for the competition random access of the normal LTE is m, and the Preamble index is [0, m-1]; the number of the Preambles used for the cluster access is n, and the Preamble index is offset on the basis of the Preamble of the competition random access of the normal LTE, and the Preamble index is [m-1, m+n-1]; and the rest of the Preambles with the index as [m+n-1∼63] are used for the non-competition access.

In step 200, when the terminal without the words right under the current cell needs to send the information to the base station, the terminal initiates the random access process, selects the corresponding Preamble within the Preamble interval used for the random access process of the cluster terminal and sends the random access request (that is, Msg1) to the base station.

Wherein, the moment that the cluster terminal initiates the random access includes but not limited to the following:
reporting the state information, applying for the words right, occupying the words right, and releasing the words right.

In step 300, the base station receives the random access request initiated by the terminal, and distinguishes that the random access request is the normal random access request or the random access of the cluster terminal (i.e., transmitting the cluster message through the random access process) through the Preamble therein; if it is the random access of the cluster terminal, then step 400 is executed; otherwise, step 700 is executed.

In step 400, the base station performs the Msg3 authorization according to the type of the cluster random access, and sends the authorization result to the terminal device through the Msg2.

In step 500, the terminal device receives the Msg2, forms the Msg3 according to the authorization result and the uplink information to be sent in the Msg2, and sends the Msg3 to the base station.

In step 600, the base station receives the Msg3; if the Msg3 message is successfully analyzed, then the cluster message reported by the terminal is acquired through the corresponding field, and the process is over.

In step 700, it is executed according to the normal random access process.

### Embodiment 2

The network side device provided by the present embodiment at least includes a sending module, a judgment module and a cluster terminal random access processing module.

The sending module is configured to: notify each terminal of a configured preamble range for random access of a cluster terminal under a current cell through a broadcast message.

Wherein, under the configured current cell, the Preamble range used for the random access of the cluster terminal can be configured through the background statically or dynamically, and then the Preamble range is synchronized to the foreground of the base station.

The judgment module is configured to: receive a random access request initiated by the terminal, and acquire a preamble in the random access request, and send the random access request to the cluster terminal random access processing module when determining that the random access request is the random access of the cluster terminal according to the preamble range used for random access of the cluster terminal configured by the configuration module.

The cluster terminal random access processing module is configured to: receive the random access request sent by the judgment module, perform Msg3 authorization on the terminal which initiates the request according to a type of the random access, and notify the terminal of an authorization result through an Msg2; and analyze the Msg3 message sent by the terminal, and acquire the cluster message reported by the terminal therefrom.

It also should be explained that, the preferable scheme proposes that the configuration module can dynamically adjust the preamble range used for the random access of the cluster terminal through a number of the cluster terminals and a number of normal LTE terminals accessed under the current cell.

Specifically, the above-mentioned network side device is the base station.

### Embodiment 3

The present embodiment provides a terminal device, including a first module and a second module.

The first module is configured to: acquire a preamble range for random access of a cluster terminal configured by a network side through a broadcast message, and when where is a need for a cluster operation, select a corresponding preamble in the preamble range for the random access of the cluster terminal to send a random access request to a base station.

Specifically, the first module can initiate a random access request used for the random access of the cluster terminal when there is a need for the following cluster operation:
reporting state information, applying for words right, occupying the words right, and releasing the words right.

Certainly, it not limited to the above-mentioned several operations.

The second module is configured to: receive an Msg2 sent by the base station, form an Msg3 according to an authorization result in the Msg2 and uplink information to be sent, and send the Msg3 to the base station.

Wherein, uplink information carried by the Msg3 sent by the second module includes state information and signaling of the cluster terminal.

It can be seen from the above embodiments, in the technical scheme of the present application, in order to achieve transmitting the uplink information of the user without the words right in the cluster system and as far as possible to save the system resources, the random access of the user without the words right is distinguished from the random access of other users through dividing different Preamble ranges in the process of the random access processing, and it extends the Msg3 in the random access process of the user without the words right to carry the corresponding state information or signaling, etc., so as to achieve the objective that the user without the words right can just complete reporting the uplink information while does not need to establish the RRC connection, which improves the system capacity.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

### Industrial Applicability

The technical scheme of the present application saves the system resources effectively and improves the system capacity.

## Claims

1. A method for sending a cluster message, **characterized by** comprising:
configuring a preamble range for random access for cluster terminals under a current cell (100), and a base station notifying the preamble range for random access configured for the cluster terminals to each cluster terminal through a broadcast message;
when one of the cluster terminals without a words right under the current cell needs to send information to the base station, the one of the cluster terminals initiating a random access process, wherein the moment that the one of the cluster terminals initiates the random access comprises one of following:
reporting state information, applying for words right, occupying words right, and releasing words right;
the base station receiving a random access request initiated by the one of the cluster terminals (200), and if determining that the terminal transmits a cluster message through the random access process by a preamble in the random access request (300), then performing Msg3 authorization on the one of the cluster terminals according to a type of the cluster random access, and notifying the one of the cluster terminals of an authorization result through an Msg2 (400);
the one of the cluster terminals receiving the Msg2, forming an Msg3 according to the authorization result in the Msg2 and uplink information to be sent, and sending the Msg3 to a base station (500); wherein, uplink information carried by the Msg3 sent by the one of the cluster terminals comprises state information and signaling of the one of the cluster terminals; and
the base station receiving and analyzing the Msg3 message (600), and acquiring the cluster message reported by the one of the terminals therefrom.

2. The method according to claim 1, wherein, a static or dynamic configuration mode is adopted for configuring the preamble range for the random access of the cluster terminal under the current cell.

3. The method according to claim 2, wherein, when a dynamic mode is adopted for configuring the preamble range for the random access of the cluster terminal, the preamble range for the random access of the cluster terminal is dynamically adjusted through a number of the cluster terminals and a number of normal long term evolution (LTE) terminals accessed under the current cell.

4. The method according to any one of claims 1 to 3, wherein, the base station dynamically adjusts the preamble range for the random access of the cluster terminal through a number of the cluster terminals and a number of normal long term evolution (LTE) terminals accessed under the current cell.

5. A base station, **characterized by** comprising a sending module, a judgment module and a cluster terminal random access processing module, wherein,the sending module is configured to: configure a preamble range for random access for cluster terminals under a current cell, notify the preamble range for random access configured for the cluster terminals under the current cell to each cluster terminal through a broadcast message;
when one of the cluster terminals without a words right under the current cell needs to send information to the base station, the one of the cluster terminals is configured to initiate a random access process:, wherein the moment that the one of the cluster terminals initiates the random access comprises one of following: reporting state information, applying for words right, occupying words right, and releasing words right;
the judgment module is configured to: receive a random access request initiated by the one of the cluster terminals, and acquire a preamble in the random access request, and send the random access request to the cluster terminal random access processing module when determining that the random access request is the random access of the one of the cluster terminal according to the preamble range used for random access configured by the configuration module for the cluster terminals;
the cluster terminal random access processing module is configured to: receive the random access request sent by the judgment module, perform Msg3 authorization on the one of the cluster terminal which initiates the request according to a type of the random access, and notify the one of the cluster terminals of an authorization result through an Msg2; and analyze the Msg3 message sent by the one of the cluster terminals, and acquire a cluster message reported by the one of the cluster terminals therefrom.

6. A terminal device, **characterized by** comprising:
a first module, configured to: acquire a preamble range for random access configured by a base station for cluster terminals through a broadcast message, and when the terminal, select a corresponding preamble from the preamble range for the random access configured for the cluster terminals to send a random access request to a base station; and
a second module, configured to: receive an Msg2 sent by the base station, form an Msg3 according to an authorization result in the Msg2 and uplink information to be sent, and send the Msg3 to the base station; wherein, the first module is configured to: when the cluster terminal device without a words right under the current cell needs to send information to the base station initiate a random access request used for the random access of the cluster terminal, wherein the moment that the first module initiates the random access comprises one of following:
reporting state information, applying for words right, occupying the words right, and
releasing the words right; uplink information carried by the Msg3 sent by the second module comprises state information and signaling of the one of the cluster terminals.

## Patentansprüche

1. Verfahren zum Senden einer Clusternachricht, **dadurch gekennzeichnet, dass** das Verfahren umfasst:
Konfigurieren (100) eines Präambelbereichs für den Direktzugriff für Clusterendgeräte in einer aktuellen Zelle, und Mitteilen, durch eine Basisstation, des für die Clusterendgeräte konfigurierten Präambelbereichs für den Direktzugriff an jedes Clusterendgerät mittels einer Rundrufnachricht;
wenn eines der Clusterendgeräte ohne ein Sprachrecht in der aktuellen Zelle Informationen an die Basisstation senden muss, Initiieren eines Direktzugriffvorgangs durch das eine Clusterendgerät, wobei der Moment, in dem eines der Clusterendgeräte den Direktzugriff initiiert, eines der folgenden umfasst:
Berichten von Zustandsinformationen, Beantragen des Sprachrechts, Besetzen des Sprachrechts und Freigeben des Sprachrechts;
Empfangen (200), durch die Basisstation, einer von dem einen der Clusterendgeräte initiierten Direktzugriffsanfrage, und wenn bestimmt wird, dass das Endgerät eine Clusternachricht über den Direktzugriffsvorgang durch eine Präambel in der Direktzugriffsanfrage überträgt (300), dann Durchführen (400) von Msg3-Autorisierung an dem einen der Clusterendgeräte gemäß einer Art von Cluster-Direktzugriff, und Mitteilen eines Autorisierungsergebnisses durch eine Msg2 an das eine der Clusterendgeräte;
durch das eine der Clusterendgeräte: (500) Empfangen der Msg2, Bilden einer Msg3 gemäß dem Autorisierungsergebnis in der Msg2 und zu sendenden Uplink-Information, sowie Senden der Msg3 an eine Basisstation; wobei die von dem einen der Clusterendgeräte gesendeten, in der Msg3 enthaltenen Uplink-Informationen Zustandsinformationen und Signalisierungen des einen der Clusterendgeräte umfassen; und
Empfangen und Analysieren (600), durch die Basisstation, der Msg3-Nachricht, und Erhalten der von einem der Clusterendgeräte berichteten Clusternachricht von dort.

2. Verfahren gemäß Anspruch 1, wobei ein statischer oder dynamischer Konfigurationsmodus zum Konfigurieren des Präambelbereichs für den Direktzugriff des Clusterendgeräts in der aktuellen Zelle verwendet wird.

3. Verfahren gemäß Anspruch 2, wobei, wenn ein dynamischer Modus zum Konfigurieren des Präambelbereichs für den Direktzugriff des Clusterendgeräts verwendet wird, der Präambelbereich für den Direktzugriff des Clusterendgeräts dynamisch angepasst wird durch eine Anzahl der Clusterendgeräte und eine Anzahl der normalen LTE-Endgeräte, auf die in der aktuellen Zelle zugegriffen wird.

4. Verfahren gemäß einem der Ansprüche 1 bis 3, wobei die Basisstation den Präambelbereich für den Direktzugriff des Clusterendgeräts durch eine Anzahl der Clusterendgeräte und eine Anzahl der normalen LTE-Endgeräte, auf die in der aktuellen Zelle zugegriffen wird, dynamisch anpasst.

5. Basisstation, die **dadurch gekennzeichnet ist, dass** sie ein Sendemodul, ein Beurteilungsmodul und ein Verarbeitungsmodul für den Direktzugriff eines Clusterendgeräts umfasst, wobei das Sendemodul konfiguriert ist zum: Konfigurieren eines Präambelbereichs für den Direktzugriff für Clusterendgeräte in einer aktuellen Zelle, Mitteilen des für die Clusterendgeräte in der aktuellen Zelle konfigurierten Präambelbereichs für den Direktzugriff an jedes Clusterendgerät mittels einer Rundrufnachricht;
wenn eines der Clusterendgeräte ohne ein Sprachrecht in der aktuellen Zelle Informationen an die Basisstation senden muss, das eine der Clusterendgeräte dazu konfiguriert ist, einen Direktzugriffsvorgang zu initiieren; wobei der Moment, in dem eines der Clusterendgeräte den Direktzugriff initiiert, eines der folgenden umfasst: Berichten von Zustandsinformationen, Beantragen des Sprachrechts, Besetzen des Sprachrechts und Freigeben des Sprachrechts;
wobei das Beurteilungsmodul konfiguriert ist zum: Empfangen einer von dem einen der Clusterendgeräte initiierten Direktzugriffsanfrage, und Erhalten einer Präambel in der Direktzugriffsanfrage, und Senden der Direktzugriffsanfrage an das Verarbeitungsmodul für den Direktzugriff eines Clusterendgeräts, wenn bestimmt wird, dass es sich bei der Direktzugriffsanfrage um einen Direktzugriff des einen der Clusterendgeräte gemäß dem durch das Konfigurationsmodul für die Clusterendgeräte für den Direktzugriff konfigurierten Präambelbereich handelt;
das Verarbeitungsmodul für den Direktzugriff eines Clusterendgeräts konfiguriert ist zum: Empfangen der durch das Beurteilungsmodul gesendeten Direktzugriffsanfrage, Durchführen der Msg3-Autorisierung an dem einen der Clusterendgeräte, welches die Anforderung gemäß einer Art von Cluster-Direktzugriff initiiert, und Mitteilen eines Autorisierungsergebnisses durch eine Msg2 an das eine der Clusterendgeräte; und Analysieren der von dem einen der Clusterendgeräte gesendeten Msg3-Nachricht, und Erhalten einer von einem der Clusterendgeräte von dort berichteten Clusternachricht.

6. Endgerätevorrichtung, die **dadurch gekennzeichnet ist, dass** sie umfasst:
ein erstes Modul, das konfiguriert ist zum: Erhalten eines Präambelbereichs für den Direktzugriff, der von einer Basisstation für Clusterendgeräte konfiguriert worden ist, durch eine Rundrufnachricht, und wenn das Endgerät, Auswählen einer entsprechenden Präambel aus dem Präambelbereich für den Direktzugriff, der für die Clusterendgeräte konfiguriert worden ist, um eine Direktzugriffsanfrage an eine Basisstation zu senden; und
ein zweites Modul, das konfiguriert ist zum: Empfangen einer von der Basisstation gesendeten Msg2, Bilden einer Msg3 gemäß dem Autorisierungsergebnis in der Msg2 und zu sendenden Uplink-Information, sowie Senden der Msg3 an die Basisstation; wobei das erste Modul konfiguriert ist zum: wenn das Clusterendgerät ohne ein Sprachrecht in der aktuellen Zelle Informationen an die Basisstation senden muss, Initiieren einer Direktzugriffsanfrage, die für den Direktzugriff des Clusterendgeräts verwendet wird, wobei der Moment, in dem das erste Modul den Direktzugriff initiiert, eines der folgenden umfasst: Berichten von Zustandsinformationen, Beantragen des Sprachrechts, Besetzen des Sprachrechts und Freigeben des Sprachrechts; wobei die von dem zweiten Modul gesendeten, in der Msg3 enthaltenen Uplink-Informationen Zustandsinformationen und Signalisierungen des einen der Clusterendgeräte umfassen.

## Revendications

1. Procédé d'envoi d'un message collectif, **caractérisé en ce qu'**il comprend :
la configuration (100) d'une plage de préambule pour un accès direct pour des terminaux de groupe sous une cellule courante, et la communication, par une station de base, de la plage de préambule pour un accès direct configurée pour les terminaux de groupe, auprès de chaque terminal de groupe par le biais d'un message diffusé ;
lorsque l'un des terminaux de groupe sans droit de parole sous la cellule courante a besoin d'envoyer des informations auprès de la station de base, le lancement d'un processus d'accès direct par ledit un des terminaux de groupe, ledit moment où ledit un des terminaux de groupe lance l'accès direct comprend l'une des activités suivantes :
la transmission d'informations d'état, la demande du droit de parole, l'exercice du droit de parole, et la cession du droit de parole ;
la réception (200), par la station de base, d'une demande d'accès direct lancée par ledit un des terminaux de groupe, et s'il a été déterminé (300) que le terminal a émis un message collectif par le biais du processus d'accès direct par un préambule de la demande d'accès direct, alors la station de base met en oeuvre (400) une autorisation Msg3 sur ledit un des terminaux de groupe conformément au type d'accès direct de groupe, et communique le résultat d'autorisation audit un des terminaux de groupe par le biais d'un Msg2 ;
la réception (500) du Msg2 par ledit un des terminaux de groupe, la formation d'un Msg3 conformément au résultat d'autorisation du Msg2 et d'informations en liaison montante à envoyer, et l'envoi du Msg3 auprès d'une station de base ; lesdites informations en liaison montante portées par le Msg3 envoyé par ledit un des terminaux de groupe comprennent des informations d'état et la signalisation dudit un des terminaux de groupe ; et
la réception et l'analyse (600), par la station de base, du message Msg3, ainsi que l'acquisition du message collectif transmis par ledit un des terminaux de groupe à partir de celui-ci.

2. Procédé selon la revendication 1, dans lequel un mode de configuration statique ou dynamique est adopté pour configurer la plage de préambule pour l'accès direct du terminal de groupe sous la cellule courante.

3. Procédé selon la revendication 2, dans lequel, lorsqu'un mode dynamique est adopté pour configurer la plage de préambule pour l'accès direct du terminal de groupe, la plage de préambule pour l'accès direct du terminal de groupe est réglée de manière dynamique en fonction du nombre de terminaux de groupe et du nombre de terminaux normaux à technologie LTE (Long Term Evolution - Évolution à long terme) faisant l'objet d'un accès sous la cellule courante.

4. Procédé selon l'une quelconque des revendications 1 à 3, dans lequel la station de base règle de manière dynamique la plage de préambule pour l'accès direct du terminal de groupe en fonction du nombre de terminaux de groupe et du nombre de terminaux normaux à technologie LTE (Long Term Evolution - Évolution à long terme) faisant l'objet d'un accès sous la cellule courante.

5. Station de base, **caractérisée en ce qu'**elle comprend un module d'envoi, un module de décision et un module de traitement de processus d'accès d'un terminal de groupe ; ledit module d'envoi étant configuré pour : configurer une plage de préambule pour un accès direct pour des terminaux de groupe sous une cellule courante, communiquer la plage de préambule pour un accès direct configurée pour les terminaux de groupe sous la cellule courante auprès de chaque terminal de groupe par le biais d'un message diffusé ;
lorsque l'un des terminaux de groupe sans droit de parole sous la cellule courante a besoin d'envoyer des informations auprès de la station de base, ledit un des terminaux de groupe est configuré pour lancer un processus d'accès direct ; ledit moment où ledit un des terminaux de groupe lance l'accès direct comprenant l'une des activités suivantes : la transmission d'informations d'état, la demande du droit de parole, l'exercice du droit de parole, et la cession du droit de parole ;
le module de décision est configuré pour : recevoir une demande d'accès direct lancée par ledit un des terminaux de groupe, acquérir un préambule de la demande d'accès direct, et envoyer la demande d'accès direct auprès du module de traitement de processus d'accès d'un terminal de groupe lorsqu'il a été déterminé que la demande d'accès direct est l'accès direct dudit un des terminaux de groupe conformément à la plage de préambule utilisée pour un accès direct configurée par le module de configuration pour les terminaux de groupe ;
le module de traitement de processus d'accès d'un terminal de groupe est configuré pour : recevoir la demande d'accès direct envoyée par le module de décision, mettre en oeuvre une autorisation Msg3 sur ledit un des terminaux de groupe qui a amorcé la demande conformément au type d'accès direct de groupe, et communiquer un résultat d'autorisation audit un des terminaux de groupe par le biais d'un Msg2 ; et analyser le message Msg3 envoyé par ledit un des terminaux de groupe, et acquérir un message collectif transmis par ledit un des terminaux de groupe à partir de celui-ci.

6. Dispositif terminal, **caractérisé en ce qu'**il comprend :
un premier module configuré pour : acquérir une plage de préambule pour un accès direct configurée par une station de base pour des terminaux de groupe par le biais d'un message diffusé, et lorsque le terminal, choisir un préambule correspondant dans la plage de préambule pour l'accès direct configurée pour les terminaux de groupe afin d'envoyer une demande d'accès direct à une station de base ; et
un deuxième module, configuré pour : recevoir un Msg2 envoyé par la station de base, former un Msg3 conformément au résultat d'autorisation du Msg2 et des informations en liaison montante à envoyer, et envoyer le Msg3 auprès de la station de base ; ledit premier module étant configuré pour : lorsque le dispositif terminal de groupe sans droit de parole sous la cellule courante a besoin d'envoyer des informations auprès de la station de base, lancer une demande d'accès direct utilisée pour l'accès direct du terminal de groupe, ledit moment où le premier module lance l'accès direct comprenant l'une des activités suivantes : la transmission d'informations d'état, la demande du droit de parole, l'exercice du droit de parole, et la cession du droit de parole ; lesdites informations en liaison montante portées par le Msg3 envoyées par le deuxième module comprenant des informations d'état et la signalisation dudit un des terminaux de groupe.
